# EUROPÄISCHE PATENTSCHRIFT

(11) **EP 2 296 002 B1**
(45) Veröffentlichungstag und Bekanntmachung des Hinweises auf die Patenterteilung: **31.08.2011**
(21) Anmeldenummer: 10171909.4
(22) Anmeldetag: 04.08.2010
(51) Int. Cl.: G01S 7/481, G01S 17/42

(54) **Optoelektronischer Scanner zur Abstandsbestimmung in Azimut- und Elevationsrichtung**
Opto-electronic scanner for range determination in azimuth and elevation
Scanner optoélectronique pour la détermination de distances en azimut et élévation

(30) Priorität: 05.09.2009 DE 202009012114 U
(43) Veröffentlichungstag der Anmeldung: 16.03.2011
(73) Patentinhaber: SICK AG, 79183 Waldkirch (DE)
(72) Erfinder: Pastor, Sebastian, 79104, Freiburg (DE)
(74) Vertreter: Ludewigt, Christoph

(56) Entgegenhaltungen:
- EP-A2- 0 897 120
- EP-A2- 1 538 457
- EP-A2- 2 131 229
- DE-A1- 19 757 849
- DE-C1- 4 341 080

## Beschreibung

Die Erfindung betrifft einen optoelektronischen Scanner und ein Verfahren zum Überwachen eines Überwachungsbereichs nach dem Oberbegriff von Anspruch 1 beziehungsweise 9.

Scanner werden für vielfältige Überwachungs- und Vermessungsaufgaben verwendet. Dazu tastet ein Scanstrahl einen Bereich ab und wertet das remittierte oder reflektierte Licht aus. Um auch Informationen über Objektabstände, Konturen oder Profile zu gewinnen, wird meist nicht nur die Anwesenheit von Objekten, sondern zugleich auch deren Entfernung bestimmt. Derartige entfernungsmessende Laserscanner arbeiten nach einem Lichtlaufzeitprinzip, bei dem die Laufzeit vom Scanner in die Szenerie und zurück gemessen wird und anhand der Lichtgeschwindigkeit Entfernungsdaten berechnet werden.

Es sind zwei Verfahren bekannt, um den Lichtweg zu bestimmen. Pulsbasierte Verfahren prägen dem Scanstrahl ein signifikantes Muster auf, beispielsweise einen schmalen Puls von nur wenigen Nanosekunden Dauer und bestimmen den Empfangszeitpunkt anhand dieses Musters. Bei phasenbasierten Verfahren moduliert der Lichtsender den Scanstrahl sinusförmig und es wird die Phase zwischen einer Referenz und dem empfangenen Scanstrahl ermittelt.

Bekannte Laserscanner weisen einen Drehspiegel oder ein Polygonrad auf, um periodisch eine Überwachungsebene oder ein Segment einer Überwachungsebene abzutasten. Viele Anwendungen erfordern aber die Abtastung eines dreidimensionalen Raumbereichs und nicht lediglich einer Fläche. Ein herkömmlicher Ausweg ist, den Laserscanner als Ganzes um eine Achse quer zu der internen Scanbewegung zu drehen und so eine weitere Abtastdimension hinzuzufügen. Diese Bewegung ist aber relativ schwerfällig und belastet den Scanner mechanisch.

Statt der Bewegung des ganzen Geräts kann ein Schwingspiegel verwendet werden, der quer zu der internen Drehrichtung des Scanners schwingt, so dass die eigentliche Scanbewegung des Drehspiegels und die Schwingung gemeinsam für eine dreidimensionale Abtastung sorgen. So wird zumindest für unbewegliche Objekte eine flächige Erfassung möglich. Schwingspiegel haben aber den Nachteil, dass sie baubedingt nur kleine Öffnungswinkel zulassen. Entsprechend eingeschränkt ist das Sichtfeld eines solchen Scanners und wenn man einen größeren Winkel benötigt, muss demnach ein zweiter Scanner eingesetzt werden.

Aus der DE 197 57 849 A1 ist ein Scanner für eine Vorrichtung zur optischen Erfassung von Objekten bekannt. Dabei werden mehrere um eine Drehachse bewegliche Sender in einer Linie übereinander angeordnet, um pro Umlauf einen größeren Bereich des Überwachungssektors abzudecken. In Umlaufwinkelbereichen, in denen die Sender nicht direkt in den Überwachungssektor abstrahlen können, ist ein mehrflächiger Spiegel zur Umlenkung in den Überwachungssektor mit drei Bereichen vorgesehen. In den beiden äußeren Bereichen verkippen diese Spiegel die Linienanordnung der Sendelichtstrahlen aus der Vertikalen in die Horizontale.

Die EP 0 897 120 A2 offenbart eine Vorrichtung zum Orten von in einen zu überwachenden Raumbereich eindringenden Objekten. Dabei ist eine drehbare Umlenkeinrichtung vorgesehen, deren Zentrum als Sendeumlenkspiegel fungiert. Um die dadurch hervorgerufene Kernabschattung auszugleichen, wird als Empfangsoptik eine Mehrzonenlinse verwendet.

In der EP 1 538 457 A2 ist ein dreidimensionaler Positionsmesssensor offenbart. Zwei drehbare Platten dienen der Einstellung des Azimuths, und über ein Getriebe kann die Neigung eines Spiegels auf das Zielobjekt ausgerichtet werden. Die Entfernungsmessung erfolgt nach einem Triangulationsprinzip durch Auswertung der Lage von zwei Sendespots auf einem ortsaufgelösten Empfänger.

Die DE 43 41 080 C1 beschreibt ein besonderes Testziel für einen Laserscanner. Um Übersteuerungen aufgrund zu großer an dem Testziel reflektierter Lichtintensitäten zu vermeiden, wird das Testziel so ausgebildet, dass nur ein bestimmter Anteil des Sendelichtstrahls zum Detektor zurückgeführt wird.

Es ist daher Aufgabe der Erfindung, einen Scanner derart weiterzubilden, dass bei einer Abtastung von Raumbereichen ein größerer Winkelbereich erfassbar ist.

Diese Aufgabe wird durch einen optoelektronischen Scanner nach Anspruch und ein Verfahren zum Überwachen eines Überwachungsbereichs nach Anspruch 9 gelöst. Die Lösung geht von einem Scanner aus, dessen Scanstrahl sich in einem Teil jeder Abtastperiode für die eigentliche Detektion ungenutzt in einem Rücklauf befindet. Der während des Rücklaufs weitgehend ungenutzte, ins Gehäuseinnere gerichtete Scanstrahl wird erfindungsgemäß in den Überwachungsbereich abgelenkt, um für die Erfassung genutzt zu werden. Dabei sorgt eine zweite Ablenkeinheit für eine flächige Abtastung. Es entsteht ein Kombinationsgerät, welches in der ersten Teilperiode wie ein herkömmlicher Scanner eine Überwachungsebene abtastet und zusätzlich in der zweiten Teilperiode einen dreidimensionalen Raumbereich überwacht, der sich zumeist in einem Teilsektor mit der Überwachungsebene überlappt.

Die Erfindung hat damit Vorteile gegenüber einem herkömmlichen Scanner mit nur einer Überwachungsebene, denn sie gewinnt zusätzlich dreidimensionale Informationen. Auch gegenüber einem herkömmlichen dreidimensionalen Scanner entsteht ein erheblicher Informationsgewinn. Denn die Überwachungsebene deckt im Gegensatz zu dem durch den Schwingspiegel derartiger dreidimensionaler Scanner begrenzten Sichtbereich einen großen Winkelbereich von bis zu 270° ab. Gegenüber zwei separaten Systemen ist der Aufwand bei Herstellung, Montage und Betrieb deutlich reduziert und es ist ein sehr kompakter Aufbau möglich. Der Informationsgewinn gegenüber den einzelnen herkömmlichen Systemen reicht für viele Anwendungen aus, indem erfindungsgemäß sowohl ein meist kleinerer dreidimensionaler Bereich als auch eine Ebene in einem großen Öffnungswinkel abgetastet wird.

Die erste Ablenkeinheit ist bevorzugt dafür ausgebildet, sowohl in der ersten Teilperiode als auch in der zweiten Teilperiode den reflektierten oder remittierten Lichtstrahl zu dem Lichtempfänger umzulenken. Der aus dem Überwachungsbereich zurückkehrende Lichtstrahl nutzt also sowohl in der ersten Teilperiode als auch in der zweiten Teilperiode denselben Empfangspfad und dieselbe Auswertungselektronik. So wird die erfindungsgemäße Kombination mit äußerst geringem Aufwand erreicht.

Der Scanner ist bevorzugt als entfernungsmessender Laserscanner ausgebildet, wobei die Auswertungseinheit dafür ausgebildet ist, Entfernungen anhand einer phasen- oder pulsbasiert bestimmten Lichtlaufzeit zu ermitteln. Laserlicht lässt sich besonders gut als gebündelter Scanstrahl nutzen. Die mit einem Lichtlaufzeitprinzip ermittelten Entfernungsdaten ermöglichen, Profile und Konturen aufzuzeichnen oder beispielsweise in der Sicherheitstechnik in den durch den Scanwinkel und die gemessene Entfernung gegebenen Polarkoordinaten praktisch beliebig geformte Schutzfelder zu definieren. Dabei ist mit pulsbasierten Verfahren jede Signalform umfasst, die einen markanten Signalverlauf hat, beispielsweise einen Peak, eine Flanke oder einen Wendepunkt, und daran zeitlich genau festgelegt werden kann.

Die periodische Ablenkung erfolgt bevorzugt in der zweiten Ablenkrichtung mit einer geringeren Frequenz als in der ersten Ablenkrichtung. Der Frequenzunterschied sollte noch bevorzugter sogar erheblich sein, beispielsweise indem die Frequenz der Abtastung in der ersten Ablenkrichtung ein Vielfaches beträgt. Die zweite Ablenkeinheit bewegt sich demnach vergleichsweise träge und scannt jeweils eine Linie während des raschen Durchlaufs der ersten Ablenkeinheit, wobei sich dann die Linien über eine Halbperiode der zweiten Ablenkeinheit zu einem flächigen Abtastmuster zusammensetzen. Prinzipiell ist auch denkbar, das Verhältnis der Frequenzen umzukehren und mit der zweiten Ablenkeinheit während nur eines einfachen Durchgangs des Scanstrahls aufgrund der Ablenkung in der ersten Ablenkrichtung eine senkrechte Scanlinie zu erzeugen. Bei dem üblichen schnellen Durchlauf des Scanstrahls an der ersten Ablenkeinheit ist eine derart schnelle Bewegung der zweiten Ablenkeinheit aber meist nicht erreichbar.

Die erste Ablenkeinheit ist bevorzugt als Drehspiegel ausgebildet. Ein Polygonrad ist für die Erfindung weniger geeignet als ein Einspiegelsystem, da es keine ausgeprägte zweite Teilperiode mit einem Rücklauf zulässt und auch den Öffnungswinkel in seiner Überwachungsebene deutlich begrenzt. Ein Drehspiegel dagegen hat zumindest dem Prinzip nach einen Öffnungswinkel von 360°, wobei dieser Öffnungswinkel in die erste und zweite Teilperiode aufgeteilt ist und nur in der ersten Teilperiode direkt als Öffnungswinkel der Überwachungsebene genutzt wird.

Die erste Ablenkeinheit weist bevorzugt einen inneren Ablenkbereich für den gesendeten Lichtstrahl und einen äußeren Ablenkbereich für den empfangenen Lichtstrahl auf. Scanner werden meist nach dem Autokollimationsprinzip gebaut, wobei der äußere Lichtweg für den Sende- und Empfangspfad identisch ist. Intern erfolgt dann eine Auftrennung, so dass der Empfangspfad den Lichtempfänger erreicht. Anstelle einer Ablenkeinheit mit verschiedenen Teilbereichen ist prinzipiell auch ein halbdurchlässiger Teilerspiegel denkbar, der aber Energieverluste und Streulicht mit sich bringt.

Die zweite Ablenkeinheit ist bevorzugt als Schwingspiegel ausgebildet. Damit lässt sich der Scanstrahl auf einfache Weise zu einer flächigen Abtastung ablenken.

Die erste Teilperiode beträgt bevorzugt zumindest die Hälfte der Periode der ersten Ablenkeinheit, so dass in dem vorderen Überwachungsbereich während der ersten Teilperiode eine Überwachungsebene in einem Sichtbereich von zumindest 180° überwachbar ist. So können große Öffnungswinkel für die Überwachungsebene erreicht werden, die auch bis zu 270° betragen. Begrenzt wird der Öffnungswinkel einerseits durch Gehäusebauformen und andererseits verbleibt mit zunehmendem Öffnungswinkel des vorderen Überwachungsbereichs eine entsprechend verkürzte zweite Teilperiode und damit ein verkleinerter dreidimensionaler überwachter Raumbereich.

Die zweite Ablenkeinheit ist bevorzugt zur periodischen Ablenkung in einem Winkelbereich von 20° bis 80°, insbesondere von etwa 60° ausgebildet. Bei Verwendung eines Schwingspiegels ist dies der optische Schwingbereich. Je größer der Winkelbereich, desto größer ist die Ausdehnung des überwachten dreidimensionalen Raumbereichs in der zweiten Ablenkrichtung, wobei dies aber bei gleich schneller Elektronik auf Kosten der Auflösung geht.

Die Umlenkeinheit und die zweite Ablenkeinheit sind bevorzugt derart ausgebildet, dass zumindest in einer Unterperiode von 20° bis 160°, insbesondere von 50° bis 100° oder von etwa 60° der zweiten Teilperiode der Lichtstrahl über das Umlenkelement und die zweite Ablenkeinheit in den Überwachungsbereich lenkbar ist. Die Länge der zweiten Teilperiode ist durch die erste Teilperiode und damit durch den gewünschten Öffnungswinkel der Überwachungsebene begrenzt. Innerhalb der zweiten Teilperiode kann dann durch Ausbildung der Umlenkeinheit und der zweiten Ablenkeinheit ein gewünschter Teilbereich als Unterperiode der dreidimensionalen Abtastung erreicht werden.

In dem rückwärtigen Bereich ist bevorzugt ein Referenzziel zum Testen der Funktionsfähigkeit des Scanners derart angeordnet, dass es während der zweiten Teilperiode außerhalb der Unterperiode von dem Lichtstrahl getroffen wird. Ein Anteil der zweiten Teilperiode wird so nicht für die Messung, sondern für einen Funktionstest genutzt. Dieser Test wird außerhalb der Unterperiode ausgeführt und stört so nicht die dreidimensionale Abtastung. Das Referenzziel wird deshalb bevorzugt in einem der Übergänge zwischen der ersten und zweiten Teilperiode angeordnet.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Ausführungsform eines erfin- dungsgemäßen Scanners während einer ersten Teilperiode des Scanvor- gangs, in dem ein Lichtstrahl eine vordere Überwachungsebene abtastet;
- Fig. 2: eine Schnittdarstellung gemäß Figur 1 während einer zweiten Teilperiode des Scanvorgangs, in dem der Lichtstrahl über eine rückwärtige Umlen- kung einen dreidimensionalen überwachten Raumbereich abtastet;
- Fig. 3: eine schematische Schnittdarstellung eines erfindungsgemäßen Scanners zur Erläuterung der vorderen Überwachungsebene und des dreidimensio- nalen überwachten Raumbereichs; und
- Fig. 4: eine Draufsicht auf den Scanner, die vordere Überwachungsebene und den dreidimensionalen überwachten Raumbereich gemäß Fig. 3.

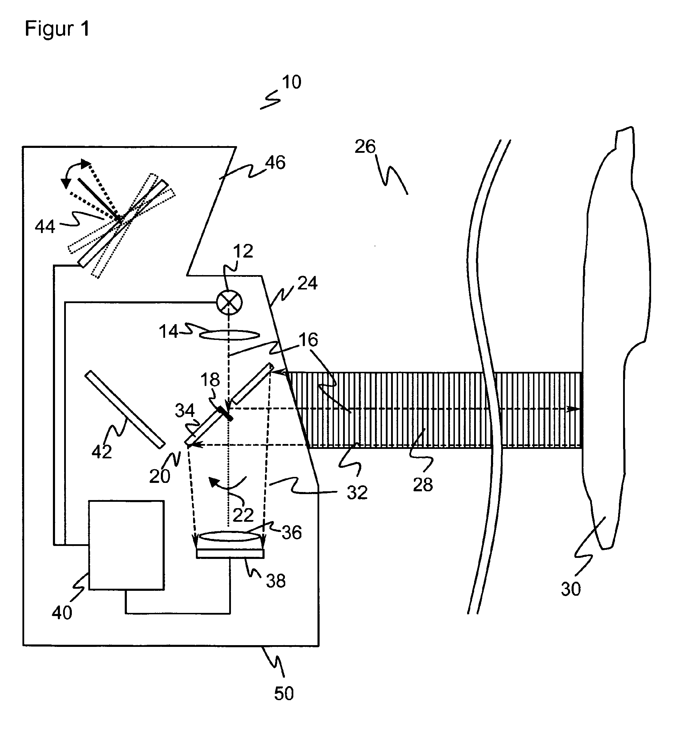

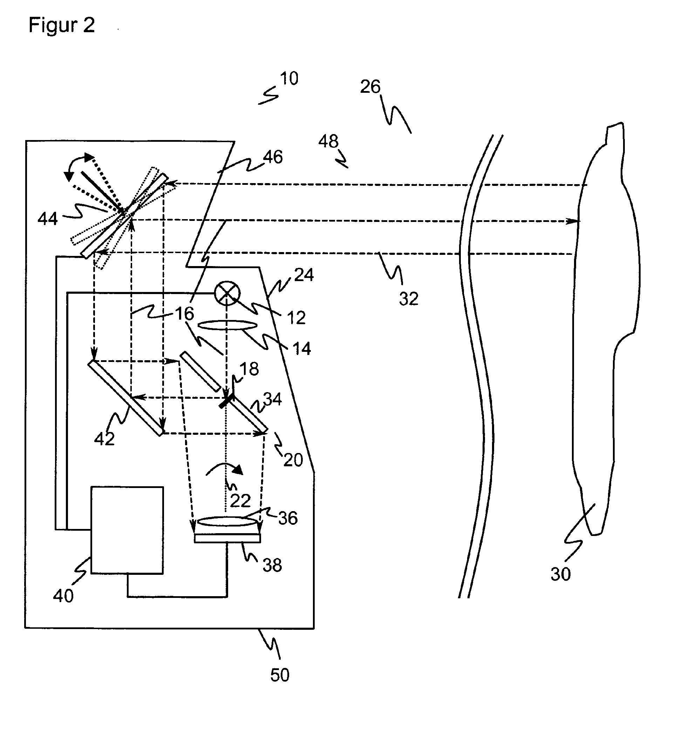

Figur 1 zeigt eine Ausführungsform eines erfindungsgemäßen Scanners 10 in einer schematischen Schnittdarstellung. Eine Halbleiterlichtquelle 12, beispielsweise ein Laser im infraroten, sichtbaren oder ultravioletten Bereich, sendet ein Lichtbündel aus. Eine Sendeoptik 14 formt aus dem Sendelicht einen Scanstrahl oder Sendelichtstrahl 16, der auf einen inneren Teilbereich 18 eines Drehspiegels 20 fällt. Der Drehspiegel 20 rotiert um eine Achse 22 und lenkt so den Sendelichtstrahl 16 periodisch über einen Drehwinkelbereich von 360° ab. Bei einer Drehstellung wie in Figur 1 während einer ersten Teilperiode der Drehung wird der Sendelichtstrahl 16 durch eine erste Frontscheibe 24 des Scanners 10 in einen zu überwachenden oder zu vermessenden Raumbereich 26 abgelenkt. Figur 2 zeigt eine Drehstellung während einer zweiten Teilperiode der Drehung, in welcher der Drehspiegel 20 den Sendelichtstrahl 16 nach hinten in das Innere des Scanners 10 ablenkt.

Der Sendelichtstrahl 16 überstreicht während der in Figur 1 dargestellten ersten Teilperiode eine Überwachungsebene 28. Beim Auftreffen auf ein Objekt 30 wird der Sendelichtstrahl 16 reflektiert oder remittiert und kehrt als Empfangslichtstrahl 32 zu dem Scanner 10 zurück. Dort trifft der Empfangslichtstrahl 32 erneut auf den Drehspiegel 20 und wird zum größten Teil von einem äußeren Teilbereich 34 des Drehspiegels 20 über eine Empfangsoptik 36 auf einen Lichtempfänger 38 geworfen, der beispielsweise als Photodiode, als Linie oder als Matrix lichtempfindlicher Elemente wie in einem CCD- oder CMOS-Chip ausgebildet ist. Ein kleinerer Anteil des Empfangslichtstrahls trifft auf den inneren Teilbereich 18 des Drehspiegels und geht so für die Detektion verloren. Es sind auch andere Anordnungen als ein Drehspiegel 22 mit zwei Teilbereichen 18, 34 bekannt, bei denen die Auftrennung des Sende- und Empfangskanals beispielsweise mit Trennstegen, mit mehreren Umlenkspiegeln oder teiltransparenten Spiegeln erreicht wird.

Eine Auswertungseinheit 40 empfängt das in dem Lichtempfänger in ein elektrisches Signal gewandelte Empfangssignal und bestimmt aus der Drehstellung des Drehspiegels 22 sowie aus der Lichtlaufzeit des Lichtstrahls die Anwesenheit, die Kontur und/oder die Koordinaten des Objektes 30. Die Auswertungseinheit 40 steuert außerdem den Lichtsender 12. Auf diese Weise wird in der ersten Teilperiode die Überwachungsebene 28 ausgemessen beziehungsweise überwacht.

Figur 2 zeigt den Scanner 10 in einer zweiten Teilperiode. Gleiche Bezugszeichen bezeichnen jeweils gleiche oder entsprechende Merkmale. Der Drehspiegel 20 hat sich in der hier dargestellten zweiten Teilperiode um 180° gedreht, wobei dieser Winkel nur ein beispielhafter Punkt innerhalb der zweiten Teilperiode ist. Der Sendelichtstrahl 16 wird deshalb nach hinten in das Innere des Scanners 10 abgelenkt, wo er zunächst von einem Umlenkspiegel 42 nach oben abgelenkt auf einen Schwingspiegel 44 trifft. Der Schwingspiegel 44 schwingt periodisch zwischen den gestrichelt dargestellten äuβeren Schwingpositionen, wobei der Strahlenverlauf in Figur 2 für eine mittlere, mit durchgezogenen Linien gezeigte Stellung des Schwingspiegels 44 dargestellt ist. Der Sendelichtstrahl 16 wird wie zu Figur 1 in der ersten Teilperiode beschrieben nach Durchtritt durch eine zweite Frontscheibe 46 von dem Objekt 30 remittiert oder reflektiert und, nach dem Empfangsweg erneut über den Schwingspiegel 44 und den Umlenkspiegel 42, auch ganz analog auf den Empfänger 38 geworfen und in der Auswertungseinheit 40 ausgewertet.

Durch die Schwingbewegung des Schwingspiegels 44, die ebenfalls von der Auswertungseinheit 40 gesteuert wird, kann während der zweiten Teilperiode ein dreidimensionaler Raumbereich 48 abgetastet werden. Überlagert mit der Bewegung des Drehspiegels 20 führt der Schwingspiegel 44 eine vergleichsweise langsame Schwingbewegung aus und scannt so mit jedem Durchgang des Drehspiegels 20 eine andere Linie in der durch den Drehspiegel 20 vorgegebenen Richtung ab. Über die Winkelpositionen des Drehspiegels 20 in mehreren zweiten Teilperioden entsteht so eine flächige Abtastung, welcher die Auswertungseinheit durch die Winkelstellung des Drehspiegels 20, des Schwingspiegels 44 und die aus der Lichtlaufzeit gemessene Entfernung dreidimensionale Polarkoordinaten zuordnen kann.

Die Bauform des Gehäuses 50 des Scanners 10 mit seinen beiden Frontscheiben 24 und 46 ist nur beispielhaft zu verstehen. Diese Bauform kann den Sichtwinkel in beiden Scanrichtungen begrenzen und ist daher passend zu wählen, einschließlich anderer oder Verzicht auf Schrägstellung der Frontscheiben 24, 46 oder einer gemeinsamen Frontscheibe. Die Frontscheiben 24, 46 können außerdem um das Gehäuse 50 herum gezogen sein, um größere Öffnungswinkel zu ermöglichen.

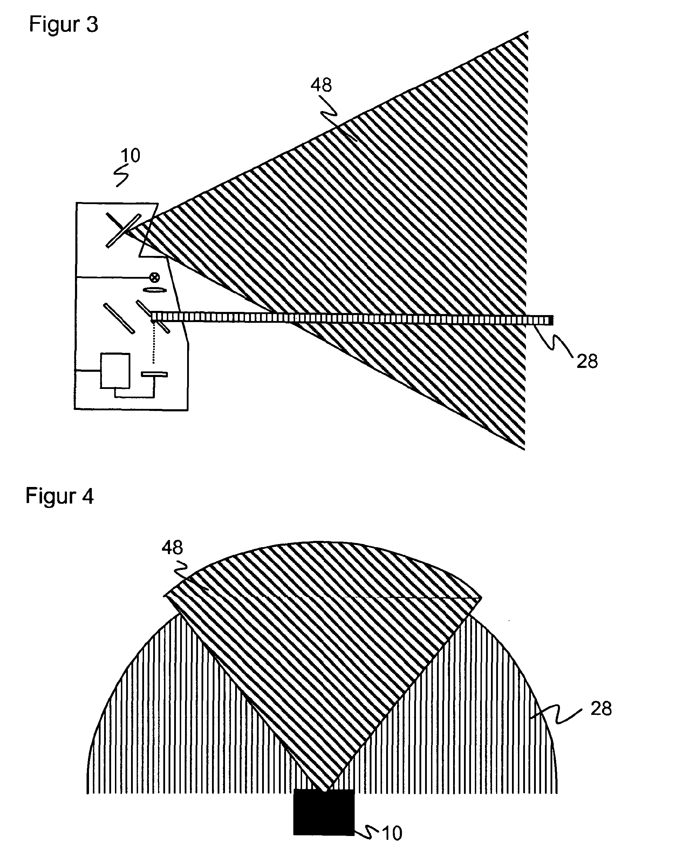

Figur 3 illustriert die Kombination aus Überwachungsebene 28 und dreidimensionalem überwachtem Raumbereich 48 in einer Schnittdarstellung, während Figur 4 eine zugehörige Draufsicht zeigt. Der dreidimensionale überwachte Raumbereich 48 überlappt die Überwachungsebene 28 zumindest in einem Teilsektor. Durch eine andere Grundstellung des Schwingspiegels 44 kann die Überlappung bei Bedarf auch verhindert werden.

Die Überwachungsebene 28 umfasst einen großen Winkelbereich von bis zu 180° und mehr. Der dreidimensionale überwachte Raumbereich 46 ist durch zwei Winkel definiert. Ein Winkel entspricht demjenigen Anteil an der zweiten Teilperiode, in dem der Sendelichtstrahl auf den Umlenkspiegel 42 und den Schwingspiegel 44 trifft. Dadurch ist ein Öffnungswinkel in der Ebene der Überwachungsebene 28 von bis zu 60° und mehr erreichbar. Durch entsprechende Bauform und Anordnung von Umlenkspiegel 42 und Schwingspiegel 44, beispielsweise eine den Drehspiegel 20 umgebende Kontur, lässt sich dieser Winkel nahezu bis zum vollen Komplement der ersten Teilperiode vergrößern. Der zweite Winkel wird durch den Schwingbereich des Schwingspiegels 44 vorgegeben, dessen optischer Schwingbereich ebenfalls bis zu 60° und mehr betragen kann.

Es ergibt sich so ein kombinierter Überwachungsbereich aus einer Überwachungsebene 28 mit einem Öffnungswinkel von beispielsweise 180° und einem überwachten dreidimensionalen Raumbereich 48 von beispielsweise 60° x 60°. In vielen Applikationen, wie Rückraumabsicherung oder Antikollision, wird der Rücklauf des Scanners 10 nicht genutzt, oder er wird lediglich durch einen Scannerfunktionstest mit einem Referenzziel verwendet, welcher aber die zweite Teilperiode bei weitem nicht ausfüllt. Erfindungsgemäß wird der somit herkömmlich weitgehend ungenutzte Rücklauf vorteilhaft verwendet, um einen üblichen Ebenenscanner mit einem dreidimensionalen Schwingspiegelscanner zu kombinieren.

## Patentansprüche

1. Entfernungsmessender optoelektronischer Scanner (10), der einen Lichtsender (12) zum Aussenden eines Lichtstrahls (16), eine erste Ablenkeinheit (18, 20) zur periodischen Ablenkung des Lichtstrahls (16) in einer ersten Ablenkrichtung, um abwechselnd in einer ersten Teilperiode einen vorderen Überwachungsbereich (26) und in einer zweiten Teilperiode einen rückwärtigen Bereich des Scanners (10) zu überstreichen, einen Lichtempfänger (38) zum Erzeugen eines Empfangssignals aus dem in dem Überwachungsbereich remittierten oder reflektierten Lichtstrahl (32) sowie eine Auswertungseinheit (40) aufweist, welche für die Erkennung von Objekten (30) in dem Überwachungsbereich anhand des Empfangssignals sowie dafür ausgebildet ist, Entfernungen anhand einer phasen- oder pulsbasiert bestimmten Lichtlaufzeit zu ermitteln, wobei in dem rückwärtigen Bereich eine Umlenkeinheit (42) vorgesehen ist, **gekennzeichnet durch**
eine als Schwingspiegel ausgebildete zweite Ablenkeinheit (44), welche zur periodischen Ablenkung des Lichtstrahls (16, 32) in einer zweiten Ablenkrichtung quer zu der ersten Ablenkrichtung ausgebildet ist und auf welche die Umlenkeinheit (42) den Lichtstrahl (16) umlenkt, wobei die periodische Ablenkung in der zweiten Ablenkrichtung mit einer geringeren Frequenz erfolgt als in der ersten Ablenkrichtung.

2. Scanner (10) nach Anspruch 1,
wobei die erste Ablenkeinheit (20) dafür ausgebildet ist, sowohl in der ersten Teilperiode als auch in der zweiten Teilperiode den reflektierten oder remittierten Lichtstrahl (32) zu dem Lichtempfänger (38) umzulenken.

3. Scanner (10) nach einem der vorhergehenden Ansprüche,
wobei die erste Ablenkeinheit (20) als Drehspiegel ausgebildet ist.

4. Scanner (10) nach einem der vorhergehenden Ansprüche,
wobei die erste Ablenkeinheit (20) einen inneren Ablenkbereich (18) für den gesendeten Lichtstrahl (16) und einen äußeren Ablenkbereich (34) für den empfangenen Lichtstrahl (32) aufweist.

5. Scanner (10) nach einem der vorhergehenden Ansprüche,
wobei die erste Teilperiode zumindest die Hälfte der Periode der ersten Ablenkeinheit (20) beträgt, so dass in dem vorderen Überwachungsbereich (26) während der ersten Teilperiode eine Überwachungsebene (28) in einem Sichtbereich von zumindest 180° überwachbar ist.

6. Scanner (10) nach einem der vorhergehenden Ansprüche,
wobei die zweite Ablenkeinheit (44) zur periodischen Ablenkung in einem Winkelbereich von 20° bis 80°, insbesondere von etwa 60° ausgebildet ist.

7. Scanner (10) nach einem der vorhergehenden Ansprüche,
wobei die Umlenkeinheit (42) und die zweite Ablenkeinheit (44) derart ausgebildet sind, dass zumindest in einer Unterperiode von 20° bis 160°, insbesondere von 50° bis 100° oder von etwa 60° der zweiten Teilperiode der Lichtstrahl (16) über das Umlenkelement (42) und die zweite Ablenkeinheit (44) in den Überwachungsbereich (48) lenkbar ist.

8. Scanner (10) nach Anspruch 7,
wobei in dem rückwärtigen Bereich ein Referenzziel zum Testen der Funktionsfähigkeit des Scanners (10) derart angeordnet ist, dass es während der zweiten Teilperiode außerhalb der Unterperiode von dem Lichtstrahl (16) getroffen wird.

9. Verfahren zum Überwachen eines Überwachungsbereichs (26), bei dem ein Lichtstrahl (16) ausgesandt und mit einer ersten Ablenkeinheit (18, 20) periodisch in einer ersten Ablenkrichtung abgelenkt wird, um abwechselnd in einer ersten Teilperiode einen vorderen Überwachungsbereich (26) und in einer zweiten Teilperiode einen rückwärtigen Bereich zu überstreichen, wobei aus dem in dem Überwachungsbereich remittierten oder reflektierten Lichtstrahl (32) ein Empfangssignal erzeugt wird, anhand dessen Objekte (30) in dem Überwachungsbereich erkannt und Entfernungen zu den Objekten (30) anhand einer phasen- oder pulsbasiert bestimmten Lichtlaufzeit ermittelt werden, wobei der Lichtstrahl in dem rückwärtigen Bereich mit Hilfe einer Umlenkeinheit (42) umgelenkt wird,
**dadurch gekennzeichnet,**
**dass** die Umlenkung in dem rückwärtigen Bereich den Lichtstrahl (16) auf eine als Schwingspiegel ausgebildete zweite Ablenkeinheit (44) umlenkt und der Lichtstrahl (16) dort in einer zweiten Ablenkrichtung quer zu der ersten Ablenkrichtung periodisch abgelenkt wird, wobei die periodische Ablenkung in der zweiten Ablenkrichtung mit einer geringeren Frequenz erfolgt als in der ersten Ablenkrichtung.

10. Verfahren nach Anspruch 9,
wobei die erste Teilperiode zumindest die Hälfte der Periode der ersten Ablenkeinheit (20) beträgt, so dass in dem vorderen Überwachungsbereich (26) während der ersten Teilperiode eine Überwachungsebene (28) in einem Sichtbereich von zumindest 180° überwacht wird, und/oder wobei der Lichtstrahl von der zweiten Ablenkeinheit (44) in einem Winkelbereich von 20° bis 80°, insbesondere von etwa 60° periodisch abgelenkt wird.

## Claims

1. A distance-measuring optoelectronic scanner (10) which has a light transmitter (12) for transmitting a light beam (16), a first deflector unit (18, 20) for periodically deflecting the light beam (16) in a first deflection direction in order alternately to sweep over a front monitored zone (26) in a first part period and to sweep over a rear zone of the scanner (10) in a second part period, a light receiver (38) for producing a reception signal from the light beam (32) remitted or reflected in the monitored zone as well as an evaluation unit (40) which is designed for the recognition of objects (30) in the monitored zone with reference to the reception signal and is also designed to determine distances with reference to a time of flight determined on a phase base or a pulse base, wherein a deflection unit (42) is provided in the rear zone,
**characterized by**
a second deflector unit (44) which is designed as a pivot mirror and which is designed for periodically deflecting the light beam (16, 32) in a second deflection direction transverse to the first deflection direction and onto which the deflection unit (42) redirects the light beam (16), with the periodic deflection taking place in the second deflection direction at a lower frequency than in the first deflection direction.

2. A scanner (10) in accordance with claim 1,
wherein the first deflector unit (20) is designed to redirect the reflected or remitted light beam (32) to the light receiver (38) both in the first part period and in the second part period.

3. A scanner (10) in accordance with one of the preceding claims, wherein the first deflector unit (20) is designed as a rotating mirror.

4. A scanner (10) in accordance with any one of the preceding claims, wherein the first deflector unit (20) has an inner deflection zone (18) for the transmitted light beam (16) and an outer deflection zone (34) for the received light beam (32).

5. A scanner (10) in accordance with any one of the preceding claims, wherein the first part period amounts to at least half the period of the first deflector unit (20) so that a monitored plane (28) can be monitored in a field of vision of at least 180° in the front monitored zone (26) during the first part period.

6. A scanner (10) in accordance with any one of the preceding claims, wherein the second deflector unit (44) is designed for the periodical deflection in an angular range of 20° to 80°, in particular of approximately 60°.

7. A scanner (10) in accordance with any one of the preceding claims, wherein the deflection unit (42) and the second deflector unit (44) are designed so that the light beam (16) can be guided via the deflection element (42) and the second deflector unit (44) into the monitored zone (48) at least in a sub-period of 20° to 160°, in particular from 50° to 100°, or from approximately 60°, of the second part period.

8. A scanner (10) in accordance with claim 7,
wherein a reference target is arranged in the rear zone for testing the operability of the scanner (10) such that it is hit by the light beam (16) outside the sub-period during the second part period.

9. A method for monitoring a monitored zone (26), wherein a light beam (16) is transmitted and is deflected periodically in a first deflection direction by a first deflector unit (18, 20) in order alternately to sweep over a front monitored zone (26) in a first part period and a rear zone in a second part period, wherein a reception signal is produced from the light beam (32) remitted or reflected in the monitored zone with reference to which objects (30) are recognized in the monitored zone and distances from the objects (30) are determined with reference to a time of flight determined on a phase base or pulse base, with the light beam being redirected in the rear zone with the aid of a deflection unit (42), **characterized in that**
the redirection in the rear zone redirects the light beam (16) onto a second deflector unit (44) designed as a pivot mirror and the light beam (16) is periodically deflected there in a second deflection direction transverse to the first deflection direction, with the periodic deflection taking place in the second deflection direction at a lower frequency than in the first deflection direction.

10. A method in accordance with claim 9,
wherein the first part period amounts to at least half the period of the first deflector unit (20) so that a monitored plane (28) is monitored in a field of vision of at least 180° in the front monitored zone (26) during the first part period; and/or wherein the light bream is periodically deflected by the second deflector unit (44) in an angular range of 20° to 80°, in particular from approximately 60°.

## Revendications

1. Scanneur optoélectronique pour la mesure de distance (10), qui comprend un émetteur de lumière (12) pour émettre un rayon de lumière (16), une première unité de déflexion (18, 20) pour défléchir périodiquement le rayon de lumière (16) dans une première direction de déflexion afin de balayer alternativement dans une première période partielle une zone de surveillance avant (26) est dans une seconde période partielle une zone arrière du scanneur (10), un récepteur de lumière (38) pour engendrer un signal de réception à partir du rayon de lumière (32) réémis ou réfléchi dans la zone de surveillance, ainsi qu'une unité d'évaluation (40), laquelle est réalisée pour reconnaître des objets (30) dans la zone de surveillance au moyen du signal de réception ainsi que pour déterminer des distances au moyen du temps de propagation de la lumière déterminée en se basant sur la phase ou sur des impulsions, et il est prévu une unité de renvoi (42) dans la zone arrière,
**caractérisé par**
une seconde unité de déflexion (44) réalisée sous forme de miroir oscillant, qui est réalisée pour défléchir périodiquement le rayon de lumière (16, 32) dans une seconde direction de déflexion transversale à la première direction de déflexion et vers laquelle l'unité de renvoi (42) renvoie le rayon lumineux (16), de sorte que la déflexion périodique a lieu dans la seconde direction de déflexion à une fréquence plus faible que dans la première direction de déflexion.

2. Scanneur (10) selon la revendication 1,
dans lequel la première unité de déflexion (20) est réalisée pour défléchir le rayon de lumière (32) réfléchi ou réémis vers le récepteur de lumière (32) aussi bien dans la première période partielle que dans la seconde période partielle.

3. Scanneur (10) selon l'une des revendications précédentes,
dans lequel la première unité de déflexion (20) est réalisée sous forme de miroir rotatif.

4. Scanneur (10) selon l'une des revendications précédentes,
dans lequel la première unité de déflexion (20) comprend une zone de déflexion intérieure (18) pour le rayon de lumière émis (16) et une zone de déflexion extérieure (34) pour le rayon de lumière reçu (32).

5. Scanneur (10) selon l'une des revendications précédentes,
dans lequel la première période partielle s'élève au moins à la moitié de la période de la première unité de déflexion (20), de sorte qu'un plan de surveillance (28) peut être surveillé dans une zone d'observation d'au moins 180° dans la zone de surveillance avant (26) pendant la première période partielle.

6. Scanneur (10) selon l'une des revendications précédentes,
dans lequel la seconde unité de déflexion (44) est réalisée pour défléchir périodiquement dans une plage angulaire de 20° à 80°, en particulier environ 60°.

7. Scanneur (10) selon l'une des revendications précédentes,
dans lequel l'unité de renvoi (42) et la seconde unité de déflexion (44) sont réalisées de telle façon que le rayon de lumière (16) peut être dévié via l'unité de renvoi (42) et la seconde unité de déflexion (44) vers la zone de surveillance (48) au moins dans une sous-période de 20° à 160°, en particulier de 50° à 100°, ou encore environ 60° de la seconde période partielle.

8. Scanneur (10) selon la revendication 7,
dans lequel une cible de référence pour tester la fonctionnalité du scanneur (10) est agencée dans la zone arrière de telle façon qu'elle est atteinte par le rayon de lumière (16) pendant la seconde période partielle à l'extérieur de la sous-période.

9. Procédé pour la surveillance d'une zone de surveillance (26), dans lequel un rayon de lumière (16) est émis et est défléchi périodiquement dans une première direction de déflexion au moyen d'une première unité de déflexion (18, 20), afin de balayer alternativement une zone de surveillance avant (26) dans une première période partielle et une zone arrière dans une seconde période partielle, dans lequel un signal de réception est engendré à partir du rayon de lumière (32) réémis ou réfléchi dans la zone de surveillance, signal de réception au moyen duquel des objets (30) sont reconnus dans la zone de surveillance et des distances par rapport aux objets (30) sont déterminées au moyen d'un temps de propagation de la lumière déterminé en se basant sur la phase ou sur des impulsions, de sorte que le rayon de lumière est renvoyé dans la zone arrière à l'aide d'une unité de renvoi (42),
**caractérisé en ce que**
le renvoi dans la zone arrière renvoie le rayon de lumière (16) vers une seconde unité de déflexion (44) réalisée sous forme de miroir oscillant, et le rayon de lumière (16) est défléchi périodiquement au niveau de celle-ci dans une seconde direction de déflexion transversale à la première direction de déflexion, et la déflexion périodique dans la seconde direction de déflexion a lieu avec une fréquence plus faible que dans la première direction de déflexion.

10. Procédé selon la revendication 9,
dans lequel la première période partielle s'élève au moins à la moitié de la période de la première unité de déflexion (20), de sorte que dans la zone de surveillance avant (26) pendant la première période partielle on surveille un plan de surveillance (28) dans une zone d'observation d'au moins 180°, et/ou dans lequel le rayon de lumière est défléchi périodiquement par la seconde unité de déflexion (44) dans une plage angulaire de 20° à 80°, en particulier d'environ 60°.
